# EUROPEAN PATENT APPLICATION

(11) **EP 4 074 189 A1**
(43) Date of publication of application: **19.10.2022**
(21) Application number: 22163996.6
(22) Date of filing: 23.08.2019
(51) Int. Cl.: A23L 3/00, A23C 3/033, A23L 2/46, A23L 3/18, A23L 3/20, A23L 3/22, F28F 27/00, F28D 7/00

(54) **METHOD OF HEATING LIQUID OR SEMI-LIQUID FOOD PRODUCTS, AND A SYSTEM THEREOF**

(71) Applicant: SPX Flow Technology A/S, 8600 Silkeborg (DK)
(72) Inventor: KJÆRBYE, Henrik, 8920 Randers (DK); RIIS, Claus, 8600 Silkeborg (DK)
(74) Representative: Nordic Patent Service A/S

(57) **Abstract**

A method and a regenerative system for controlling heating of liquid or semi-liquid food products, both regenerative and non-regenerative, where the temperature difference of both the media and the product is measured at the heat exchanger. A controller calculates a ratio based on the measured temperature differences and compares it to a predetermined setpoint. The controller adjusts a control parameter of the media flow or product based on an error between the ratio and the setpoint to achieve a balanced energy transfer.

## Description

### Field of the Invention

The present invention relates to a method of indirectly heating liquid or semi-liquid food products, where heat is transferred to the product from a medium flowing in a concurrent direction relative to the product.

The present invention also relates to a system for heating liquid or semi-liquid food products by indirect heating of the product.

The present invention further relates to the use of the system and/or the method.

### Background of the Invention

It is well known in the food and beverage industries to improve shelf life by subjecting the food or beverage product to heat treatment.

Typically, the heat treatment is pasteurization, a heat treatment to provide extended-shelf-life (ESL) or an UHT (ultra-high temperature) treatment.

Pasteurization is a process in which water and certain packaged and non-packaged liquid foods (such as milk or fruit juice) are treated with mild heat, usually to less than 100°C, for a period necessary to eliminate pathogens, typically 10-30 seconds or more e.g. up to 1-2 minutes, depending on the product and/or whether enzyme deactivation or microbial deactivation is required. The pasteurization process also extends shelf life of the food products. The process destroys or deactivates enzymes that contribute to spoilage of the product. Pasteurization also destroys or deactivates microorganisms including vegetative bacteria, but not bacterial spores. Thus, the risk of ingesting food containing pathogens is reduced, which also reduces the risk of diseases and/or spreading thereof.

ESL products are the products that have been treated in a manner to reduce the microbial count beyond normal pasteurization, followed by packaging under hygienic conditions. ESL products have a defined prolonged shelf life under refrigeration conditions. At present there is no generally accepted definition of ESL heat treatment. ESL heat treatment to provide ESL products, e.g. ESL-milk, fills the gap between pasteurization and ultra-high temperature treatment (UHT). Extended-shelf-life (ESL) heat treatment on milk is usually applied at 120-135°C for 1-4 seconds to extend shelf life of processed liquid milk products.

UHT treatment is mostly used to sterilize liquid food by heating it above 135°C for 2 to 5 seconds. UHT is most commonly used in milk production, but the process is also used for fruit juices, cream, soya milk, yogurt, wine, soups, honey or stews in order to kill spores, microorganisms, vira etc. UHT milk can for example be stored for a few months without cooling.

Food products (in the following just "the product"), which undergo such heat treatment, are typically liquid products or semi-liquid products, for example: dairy products, fruit and/or vegetable-based products, juice or concentrates from fruit and/or vegetables, nectars from fruits, vegetable based milk substitutes, as well as drinks of any kinds. Vegetable based milk substitutes may be based on soya, oat, nuts, almonds and/or mixtures thereof. Drinks may be coffees, teas, soft drinks or the like. The products may optionally comprise additives to alter mouthfeel, emulsification or nutritional value. Examples of the products may be determined according to general standards, such as the international codex standards or the EU directives.

Examples of dairy products are liquid dairy products such as milks, creams and/or yoghurts or similar fermented milk or cream based products and/or milk based liquids, whey or liquids or semi liquid food products based on whey, or semi liquid desserts. The heat treating of such liquid or semi liquid food products may be done using regenerative systems, where the product and medium are flowing in separate pipelines and the heat is transferred using one or more heat exchange units. The regenerative system may in example be implemented as a heat plant (in the following just "the plant"). The heating medium in such plant does essentially not change from run to run, whereas the product may. This often has a major impact both on the product and the energy consumption, unless the medium flow is adjusted to pre-determined values. However, in most cases adjusting the medium flow is partially left to the operator of the plant or written into a recipe. When applied, there is no feed-back to operator as to whether the balance is right or not.

The consequences of having a too high medium flow are higher heat load damage to the product and significantly higher energy costs than anticipated. Any drift in the delivery of energy will immediately leads to increased energy consumption both on the heating and cooling sides. The temperature difference between the input and output will also increase as the medium is incapable of passing its energy into the product. This in turn causes the temperature to rise per time unit, meaning that the 'heat-load' that damages the nutritional and organoleptic value of the product increases with the extended time that the product is under duress.

Conversely, if the flow is too low, the risk of the plant not being able to sustain production mode in general will be affected so that a robust production efficiency cannot be achieved. This in turn also affects the overall run time of the plant.

Certain proteins denature during the heating process and those are particular damaging to the time that a plant can be kept operational. As the denaturation is a process which depends on time and temperature parameters, is it important to control the incline of the temperature per time unit as the precipitation of the proteins caused by the denaturation will happen so fast that the plant gets blocked in a very short time. In practice it has been seen that run-time of a plant can be decimated by having the wrong medium flow, sometimes from 7-8 hours down to under one hour of production. Thereby forcing more frequent cleanings of the plant, thus lowering the production time and causing excessive consumption of chemicals, energy and man hours.

US20190191729 discloses a method for aseptic heating of a liquid product, such as temperature sensitive food products, in particular milk products, desserts or dessert-like products, in a heat exchanger unit of the heater or pasteurization zone of an arrangement in a UHT system.Thus, there is a need for a method and system that provide feedback on the balance of the medium flow during heat treatment of liquid or semi liquid food products.

### Object of the Invention

An object of the invention is to provide a method and a system that solves the above-mentioned problems.

Another object of the invention is to provide a method and a system that provide feedback for adjusting the medium flow.

Yet another object of the invention is to provide a method and a system that provide an adaptive control of the temperature incline.

A further object of the invention is also to provide a method and a system that allows for increased production time and improved product quality.

### Description of the Invention

As mentioned earlier, an object of the invention is achieved by a method of heating liquid or semi-liquid food products where heat is transferred to a product from a medium by indirect heating, the product flows in a first direction in a first circuit and the medium flows in a second direction in a second circuit, wherein the flows of the product and medium are separated and flow relative to each in at least one common point, wherein the method comprises the steps of:
- determining a first temperature difference of the product at the at least one common point;
- further determining a second temperature difference of the medium at the at least one common point;
- calculating at least one ratio of the first temperature difference to the second temperature difference;
- comparing the at least one ratio with at least one predetermined setpoint to detect an error between the at least one ratio and the at least one setpoint;
- adjusting a control parameter of the medium flow or the product as function of the error between the at least one ratio and the at least one setpoint.

This provides a control method that provides feedback about the balance between the medium flow and the product. The operator or an automated system may thus use the feedback to adjust the medium flow to achieve a correct medium flow relative to the product flow. This in turn allows for a controlled temperature incline per time unit, thus minimising the heat load damage of the product and reducing the total energy consumption. Thereby, allowing for an improved heat treatment of the product.

The ratio is indicative of the actual energy flow in the system and thus the transmission of heat per time unit. The ratio is independent of the mass and temperature of the product, thereby providing a robust and accurate feedback of the transferred energy to or from the product. The composition of the product may normally comprise a mixture of different chemical substances with varying specific heat values and heat transfer characteristics, thereby making it difficult to determine the combined heat property of the product in advance.

According to one embodiment, the method further comprises:
- measuring a first inlet temperature and a first outlet temperature of the product, wherein the first temperature difference is determined based on the first inlet and outlet temperatures.

The temperature difference of the product may be measured using a temperature sensor, e.g. a differential sensor, connected to the inlet and further to the outlet at the common point. Alternatively, one temperature sensor may measure a first inlet temperature and another temperature sensor may measure a first outlet temperature. The output(s) from the temperature sensor(s) is/are transmitted to a controller for further processing. The controller may then calculate the first temperature difference based on the measured inlet and outlet temperatures. This allows the amount of energy received in the product to be measured indirectly by monitoring the temperature of the product.

According to one embodiment, the method further comprises:
- measuring a second inlet temperature and a second outlet temperature of the product, wherein the second temperature difference is determined based on the second inlet and outlet temperatures.

In a similar manner, the temperature difference of the medium may be measured using a temperature sensor connected to an inlet and an outlet at the common point. Alternatively, one temperature sensor may measure a second inlet temperature and another temperature sensor may measure a second outlet temperature. The output(s) from the temperature sensor(s) is/are transmitted to the controller for further processing. The controller may calculate the second temperature difference based on the measured inlet and outlet temperatures. This allows the amount of delivered energy from the medium to be measured indirectly by monitoring the temperatures of the medium to the temperatures of the product. The actual energy flow in the system may thus be calculated and monitored via the measured temperatures of the product and medium.

The present method may further take into account the total temperature range of the medium and/or the total temperature range of the product. This may be done by calculation of the first and/or second temperature difference, as described above. This provides a control method that takes into account the heating/cooling spans for different products.

According to one embodiment, the at least one setpoint is predetermined based on previous measurements.

The setpoint indicates an ideal energy transfer between the product and the medium so that an optimum regenerative effect is achieved. This setpoint is then used to adjust one or more parameters of the medium flow, or of the product, so that a balanced flow and thus heat treatment is achieved. This adjustment may be performed manually by the operator, or automatically by the controller. This ensures an optimal heating of the product and thus increases the production time. This also reduces the overall energy consumption and thereby saving costs.

In conventional regenerative systems, the medium flow would drift away from its optimum values as it is not continuously calibrated against the actual product. Conventional regenerative systems are normally set up for the worst case and thus end up being highly uneconomical.

The setpoint may be determined based on the specific heat values of the product, the heat exchanging properties at the common point, the flow of the medium and/or product, or other factors influencing the energy transfer. The setpoint may in example be calculated or approximated using the design parameters of the regenerative system or be empirically improved based the factual local experience.

Thus, preferably, the setpoint may be determined based on historical data stored in a database. The historical data may include previous measurements relating to the same product or a similar product. Alternatively or additionally, the previous measurements may indicate other operating conditions that would influence the heating process. Such operating conditions may in example be precipitation on the heating surface. This allows for a more optimal heat control as the setpoint may be adapted to fit the actual conditions of the regenerative system.

A machine learning method may be implemented in the controller for optimisation of the coefficients used to control the medium flow and/or product flow. Such machine learning method may in example be a genetic algorithm or any other suitable machine learning method. The machine learning method may thus use the historical data to optimise the setpoint.

In example, the setpoint may range between 0.95 - 1.1 for liquid dairy products such as milk. The setpoint may range between 0.95 - 1.3 for liquid dairy products such as cream. The setpoint may range between 0.95 - 1.15 for dairy products such as juice. The setpoint range may vary for other products and/or products with different compositions.

According to one embodiment, the at least one ratio is continuously or periodically compared with the at least one predetermined setpoint.

The controller may continuously monitor the inlet and outlet temperatures of the medium and/or of the product. Alternatively, the controller may periodically monitor the inlet and outlet temperatures of the medium and/or of the product. This allows the controller to monitor the energy transfer and also the temperature incline in real-time or at fixed time intervals. The measured temperatures of the medium and/or product may be stored in a database and thereby form part of the historical data, as mentioned later. The error may likewise be detected continuously or periodically and thus the control parameter may be adjusted continuously or periodically. The error may simple be calculated as the difference between the ratio and the setpoint where an error of zero indicates that the balance of the medium flow is correct. Any drift or change in the energy flow between the medium and the product may be indicated by an error value deviating from zero. This allows the control scheme to compensate for changes in the medium flow, in the product properties or in heat exchanging properties. Thereby, providing an adaptive control of the heating and/or cooling of the product that can be maintained for repeating applications.

Alternatively, the error value may be compared with a threshold band, e.g. centred around zero, indicative of an operating range where no adjustment is made. If the error value moves, i.e. drifts, outside the threshold band, then the control parameter is adjusted so that the error value is moved within the threshold band again. The upper and lower limits of the threshold band may be selected based on the tolerances and/or the latency of the regenerative system. This allows the control to be adapted to the particular configuration of the regenerative system.

According to one embodiment, the control parameter is at least one of a flow rate, a velocity, a pressure or a temperature.

The medium as well as the product may be pumped through the first and second circuits at a predetermined flow rate, velocity and/or pressure. The flow rate, velocity and/or pressure of the product flowing in the first circuit may depend on the particular product and its properties. Similarly, the flow rate, velocity and/or pressure of the medium may depend on the type of medium being used.

Preferably, the controller may adjust at least one control parameter of the medium flow as function of the error. The control parameter may be a flow rate, a velocity or a pressure of the medium. The control parameter may also be a temperature of the medium, such as the second inlet temperature. The controller may generate a suitable control signal for adjusting the control parameter, e.g. increasing or decreasing, based on the error. The control signal may then be send to actuating means, such as a pumping unit, a heating unit, a cooling unit, which then adjusts the control parameter accordingly. According to one embodiment, the medium is a gas, a liquid, a steam or a combination thereof.

The medium may be selected to act as a heating medium and/or a cooling medium circulated through an open or closed circuit. The circulated medium may be heated and/or cooled to a predetermined operating temperature. The profile of the operating temperature, i.e. the temperature incline and/or the temperature decline, may be selected so that an optimal heat treatment of the product is achieved. The profile may be stored in a database in the controller and used to control the temperature of the medium, e.g. the second inlet temperature. The profile may in example be stored as a look-up table, an algorithm or the like.

The controller may load a new setpoint from the profile during each run in order to control the temperature incline and/or temperature decline of the product. The controller may then adjust the control parameter, if needed, to bring the ratio towards the setpoint. The medium may in example be a gas, a liquid, steam or a combination thereof, such as air, water or any other suitable medium.

As mentioned earlier, an object of the invention is also achieved by a system for heating liquid or semi-liquid food products comprising:
- a first circuit in which a product is pumped in a first flow direction by a pumping unit, where at least one temperature sensor is arranged relative to the first circuit;
- a second circuit in which a medium is pumped in a second flow direction by a pumping unit, where at least one temperature sensor is arranged relative to the second circuit;
- at least one heat exchange unit coupled to the first and second circuits, wherein the flows of the first and second circuits are separated so that heat is transferred between the medium and the product by indirect heating,
- a controller electrically connected to the temperature sensors of the first and second circuits, where the controller is configured to determine a first temperature difference of the product and a second temperature difference of the medium, to calculate at least one ratio of the first temperature difference to the second temperature difference, wherein the controller is further configured to detect an error between the at least one ratio and at least one predetermined setpoint, and to adjust a control parameter of the medium flow or the product flow as function of the error between the at least one ratio and the at least one setpoint.

This provides a regenerative system, or alternatively a non-regenerative system, that reduces the energy consumption as the medium flow is balanced relative to the product flow. This is done by adaptive control of the energy transfer between the medium flow and the product flow. The system further reduces the heat load damage of the product and thus increases the production time. This in turns saves costs for cleaning the system and improves the quality of the product.

The system has a first circuit configured to guide the product through a series of pipes in fluid communication with a first pumping unit and a heat exchange unit. The system further has a second circuit configured to guide the medium through another series of pipes in fluid commination with a second pumping unit and the heat exchange unit. The heat exchange unit defines a common point for the two circuits.

The heat exchange unit may be configured as a plate heat exchanger or a tubular heat exchanger. The heat exchanging properties are determined by the particular design of the heating surface, the wall thickness, and etc. This allows for an indirect energy transfer between the medium and the product which is dependent on a correct balance between the medium flow and the product flow.

According to one embodiment, the second circuit further comprises at least one of a heating unit or a cooling unit, the heating or cooling unit being configured to heat or cool the medium.

The medium may suitably be heated using at least one heating unit and/or cooled using at least one cooling unit. The heating unit(s) and cooling unit(s) may be electrically connected to the controller which controls the operation of each heating unit and/or cooling unit.

Each heating or cooling unit may be supplied by an external heating or cooling medium, wherein a control valve is used to control the supply of the heating or cooling medium for heating or cooling the medium to a predetermined operating temperature. Preferably, this control valve may be connected to the controller or another controller which controls the operation of the control valve.

According to one embodiment, at least one of the first and second circuits comprises an inlet temperature sensor and outlet temperature sensor, wherein the inlet and outlet temperature sensors are electrically connected to the controller.

The first circuit may comprise a temperature sensor arranged relative to an inlet of the heat exchange unit for measuring a first inlet temperature of the product. Further, the first circuit may comprise another temperature sensor arranged relative to an outlet of the heat exchange unit for measuring a first outlet temperature of the product.

The controller may be electrically connected to both temperature sensors, where the controller is configured to determine a first temperature difference based on the measured first inlet and outlet temperatures. This allows the controller to indirectly monitor the received energy to the product by measurement of the product temperature. Alternatively or additionally, the second circuit may comprise a temperature sensor arranged relative to another inlet of the heat exchange unit for measuring a second inlet temperature of the medium. Further, the second circuit may comprise yet another temperature sensor arranged relative to another outlet of the heat exchange unit for measuring a second outlet temperature of the medium.

Similarly, the controller may be electrically connected to both temperature sensors, where the controller is configured to determine a second temperature difference based on the measured second inlet and outlet temperatures. This allows the controller to indirectly monitor the delivered energy from the medium by measurement of the medium temperature.

The ratio may thus be calculated by the controller based on the measured inlet and outlet temperatures of the product and medium. This provides an indication of the actual energy transfer between the medium and the product. This actual energy transfer may optionally be displayed to the operator.

According to one embodiment, the controller is electrically connected to at least the pumping unit of at least the first or second circuit, wherein the controller is configured to adjust at least one of a flow rate, a velocity, a pressure or a temperature of the medium flow or the product flow.

The pumping unit of the second circuit may be electrically connected to the controller, where the controller is configured to control the operation of the pumping unit based on the detected error. Preferably, the controller may be configured to control the flow rate of the medium flow. Alternatively or additionally, the controller may be configured to control the velocity or pressure of the medium flow. This allows for an adaptive control of the medium flow for balancing the energy transfer between the medium and the product.

Optionally, the heating or cooling unit of the second circuit may further be electrically connected to the controller, where the controller is further configured to control the operation of the heating or cooling unit based on the detected error. The controller may be configured to control the operating temperature, e.g. the inlet temperature, of the medium flow. This also allows for an adaptive control of the medium flow for balancing the energy transfer between the medium and the product.

In an alternative configuration, the pumping unit of the first circuit may be electrically connected to the controller, where the controller is configured to control the operation of that pumping unit based on the detected error. Preferably, the controller may be configured to control the flow rate of the product flow. Alternatively or additionally, the controller may be configured to control the velocity or pressure of the product flow.

This provides an alternative way of balancing the energy transfer between the medium and the product by adaptive control of the product flow.

The controller may be configured to detect an error between the ratio and a predetermined setpoint, as described earlier. The controller may then generate a suitable control signal based on the detected error, which may then be transmitted to the respective pumping unit, heating unit or cooling unit. The pumping unit, heating unit or cooling unit may subsequently adjust the respective control parameter according to the control signal. This allows the controller to automatically balance the energy transfer between the medium and the product via the feedback from the temperature sensors. Alternatively, the energy transfer may be balanced manually by the operator via user input means of the controller.

According to one embodiment, the medium and product are pumped in the same flow direction or in opposite flow directions through the heat exchange unit.

The medium may preferably be pumped in an opposite direction of the product in the exchange unit. Dependent on the particular design of the heat exchange unit, the medium and product may instead be pumped in the same direction. This allows for a higher rate of energy transfer per time unit between the medium and the product.

According to one embodiment, one of the first and second circuits is a closed circuit while the other circuit is an open circuit.

The second circuit, or heating and/or cooling circuit, may be configured to act as a heating circuit comprising a heating unit for heating the medium. Alternatively, the heating unit may be replaced with a cooling unit so that the second circuit may act as a cooling circuit. The operation of the heating or cooling unit and thus the heating or cooling of the medium may be controlled by the controller. The controller may be configured to maintain a substantially constant temperature of the medium, or alternatively follow a predetermined temperature profile, by means of a series of setpoints. The second circuit may thus be configured as a closed circuit for circulating the medium. This allows for an adaptive control of the medium temperature and thus reduced heating or cooling costs.

The first circuit, or product circuit, may comprise just one heat exchange unit for treatment, i.e. heating or cooling, of the product. Preferably, the first circuit comprises a series of heat exchange units for separate heating and cooling of the product. The series may in example comprise two or more heat exchange units in fluid communication with each other. This allows for individual control of the heating and cooling process to ensure the product quality.

An inlet of the first circuit may be coupled to supply means, e.g. a tank or container, of the product. Further, an outlet of the first circuit may be coupled to filling means, e.g. a filling station, of the product or a further processing station.

In a simple configuration, the system may comprise a single circuit loop, e.g. a single second circuit. This allows for a simple control of the treatment of the product.

In an advanced configuration, the system may comprise a plurality of circuit loops, e.g. a plurality of second circuit loops. The individual circuit loops may have the same configuration, or different configurations. This allows for an advanced control of the treatment of the product.

According to one embodiment, the system forms part of a heating plant configured to indirectly transfer energy between the product and the medium.

The system may preferably form part of a plant for treatment of products, as described earlier. The plant may be configured as an indirect heating plant, e.g. forming part of a larger production line. This reduces the overall energy consumption and increases the production time by balancing the energy transfer.

As mentioned earlier, an object of the invention is further achieved by the use of a method as defined above or a system as defined above for heat treatment of liquid or semi-liquid food products.

The present control method and system are particularly suited for temperature control during heat treatment of products, as described earlier. This saves costs for heating and cooling of the product by adaptively balancing the energy transfer between the medium and the product. This further increases the production time and product quality, thereby also reducing the costs for cleaning the plant.

The invention is not limited to the embodiments described herein, and thus the described embodiments can be combined in any manner without deviating from the objections of the invention.

### Description of the Drawing

The invention is described by example only and with reference to the drawings, wherein:
- Fig. 1: shows a first embodiment of a heat exchanger unit according to the invention;
- Fig. 2: shows an example of an embodiment of a first circuit comprising the heat exchanger unit shown in fig. 1;
- Fig. 3: shows a second embodiment of the heat exchanger unit according to the invention;
- Fig. 4: shows an example of an embodiment of a second circuit comprising the heat exchanger unit shown in fig. 3;
- Fig. 5: shows a number of heat exchanger units connected in a series;
- Fig. 6: shows an example of an embodiment of a third circuit comprising one loop;
- Fig. 7: shows an example of an embodiment of a third circuit comprising multiple loops;
- Fig. 8: shows a flowchart of the method according to the invention;
- Fig. 9: shows an example of a graph of the measured temperatures without the present control scheme implemented; and
- Fig. 10: shows an example of a graph of the measured temperatures with the present control scheme implemented.

In the following text, the figures will be described one by one, and the different parts and positions seen in the figures will be numbered with the same numbers in the different figures. Not all parts and positions indicated in a specific figure will necessarily be discussed together with that figure.

### Position number list

1. Heat exchanger unit
1a. First heat exchanger unit
1b. Second heat exchanger unit
2. Product
3. Medium
3a. First medium
3b. Second medium
4. First inlet
5. First outlet
6. Second inlet
7. Second outlet
8a. Second circuit
8b. First circuit
9. Pumping unit
10. Heating unit
11. Controller
11a. Ratio
11b. Setpoint
12. Control parameter
13. Control valve
14. Pumping unit
15. Supply tank
16. Filling station
17. Cooling unit
18. Control valve
19. Regulator
20. Pumping unit
21. Heating unit
22. Control valve
23. Control parameter
24. First graph of product temperature
25. Second graph of medium temperature
26. Heating requirement
27. Cooling requirement

### Detailed Description of the Invention

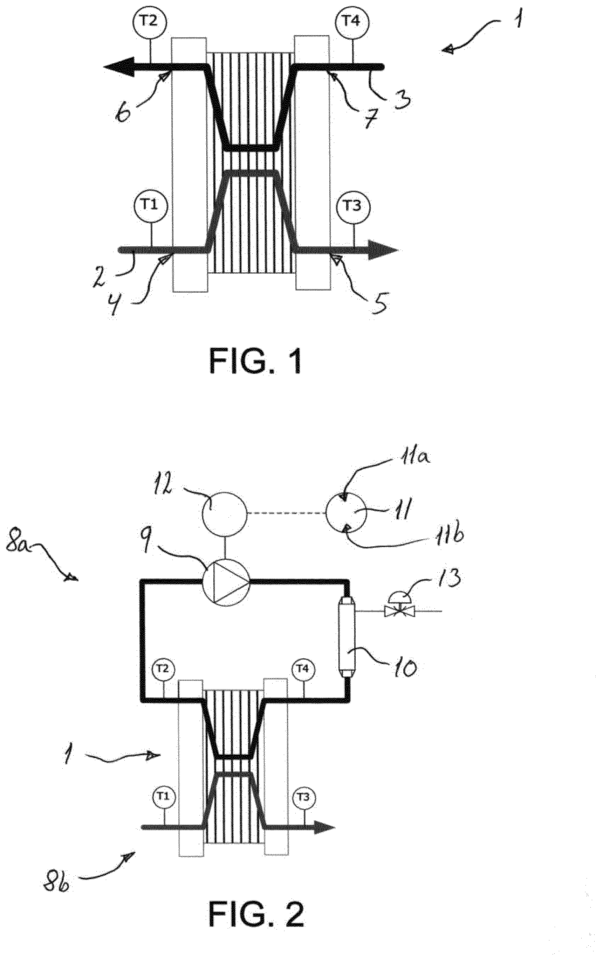

Fig. 1 shows a first embodiment of a heat exchanger unit 1 defining a medium side and a product side and separated flows. Here, the heat exchanger unit 1 is configured as a plate heat exchanger unit.

The heat exchanger unit 1 defines a common point at which a product 2 is pumped in a first direction (indicated by the light grey arrow) and a medium 3 is pumped in an opposite second direction (indicated by the dark grey arrow). As indicated, the medium flow and the product flow are separated so that energy, e.g. heat, is indirectly transferred between the medium 3 and the product 2.

The heat exchanger unit 1 has a first inlet 4 and a first outlet 5 arranged on the product side, wherein a temperature sensor measures a first inlet temperature, T1, and another temperature sensor measures a first outlet temperature, T3. The differential temperature between the first inlet 4 and first outlet 5 indicates a first temperature difference, T3-T1.

The heat exchanger unit 1 further has a second inlet 6 and a second outlet 7 arranged on the medium side, wherein a temperature sensor measures a second inlet temperature, T2, and another temperature sensor measures a second outlet temperature, T4. The differential temperature between the second inlet 6 and second outlet 7 indicates a second temperature difference, T4-T2.

Fig. 2 shows an example of an embodiment of a first circuit 8b where the product 2 is flowing through the product side of the heat exchanger unit 1 and a second circuit 8a where the medium 3 is flowing through the medium side of the heat exchanger unit 1. The second circuit 8a comprises the heat exchanger unit 1 in fluid communication with a pumping unit 9 and a heating unit 10. The pumping unit 9 is electrically connected to a controller 11 configured to control the operation of the pumping unit 9. The controller 11 is configured to calculate a ratio 11a of the first temperature difference to the second temperature difference. The controller 11 is further configured to detect an error between the ratio 11a and a predetermined setpoint 11b. A control signal is generated in the controller 11 to adjust a control parameter 12 of the medium flow.

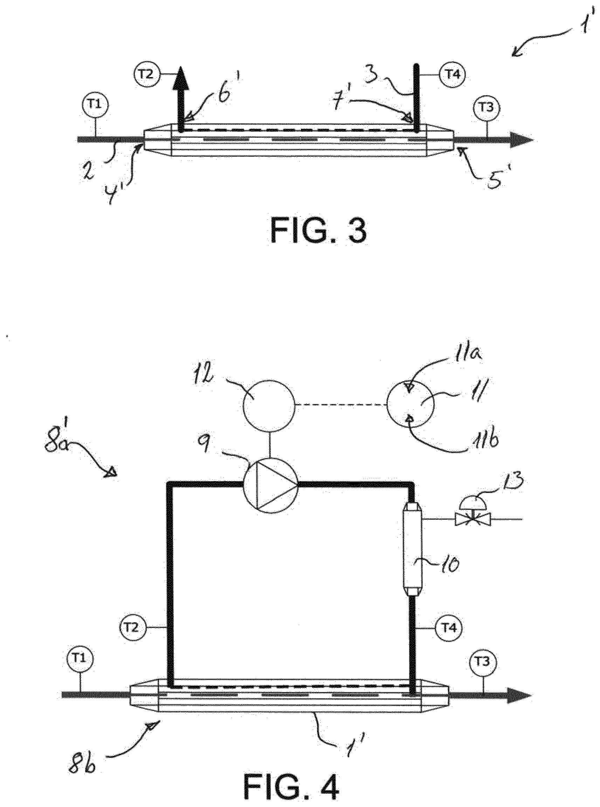

The heating unit 10 is in fluid communication with an external supply unit of another heating medium, where a control valve 13 is used to control the supply of the heating medium. The first outlet temperature T4 of the heat exchanger unit 1 is transmitted to the controller 11 via an electrical connection (not shown). The operation of the control valve 13 is controlled by the controller 11 using the first outlet temperature T3 as input. Fig. 3 shows a second embodiment of the heat exchanger unit 1' where the heat exchanger unit 1' is here configured as a tubular heat exchanger unit.

The heat exchanger unit 1' has a first inlet 4' and a first outlet 5' of the product side and a second inlet 6' and a second outlet 7' of the medium side. The differential temperature between the first inlet 4' and first outlet 5' indicates the first temperature difference. The differential temperature between the second inlet 6' and second outlet 7' indicates the second temperature difference.

Fig. 4 shows an example of an embodiment of the heat exchanger unit 1' arranged in a similar second circuit 8a' as shown in figure 2.

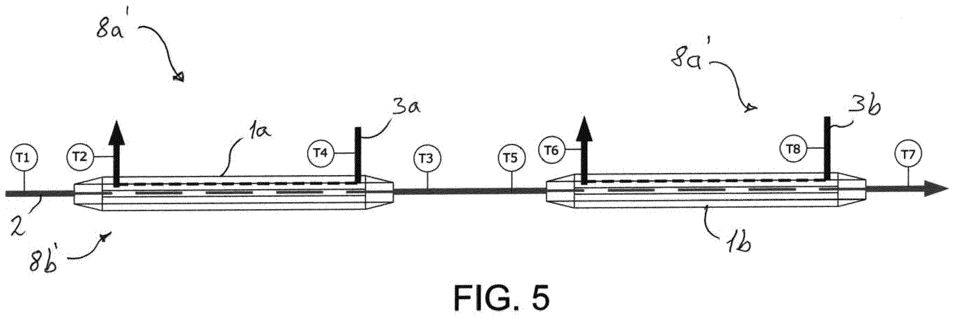

Fig. 5 shows a series of heat exchanger units 1' formed by a number of heat exchanger units in fluid communication with each other. Here, the series is formed by two heat exchanger units 1a, 1b. The product 2 flows through a production side of each heat exchanger unit 1a, 1b.

A first medium 3a is flowing through a medium side of the first heat exchanger unit 1a while a second medium 3b is flowing through a medium side of the second heat exchanger unit 1b. The first medium 3a differs the second medium 3b in this configuration, but the first and second medium 3a, 3b could be the same medium.

Each of the heat exchanger units 1a, 1b has a set of temperature sensors arranged relative to each first inlet and outlet and each second inlet and outlet. The controller (not shown here) then determines one first temperature difference, T3-T1, and one second temperature difference, T4-T2, of the first heat exchanger unit 1a. A first ratio is subsequently calculated based on the above first and second temperature differences, which is used to adjust the control parameter of the first medium flow.

Further, another first temperature difference, T7-T5, and another second temperature difference, T8-T6, of the first heat exchanger unit 1a is determined by the controller of the second heat exchanger unit 1b. A second ratio is subsequently calculated based on the above first and second temperature differences, which is used to adjust the control parameter of the second medium flow.

The first and second medium flows are adjusted individually by the controller.

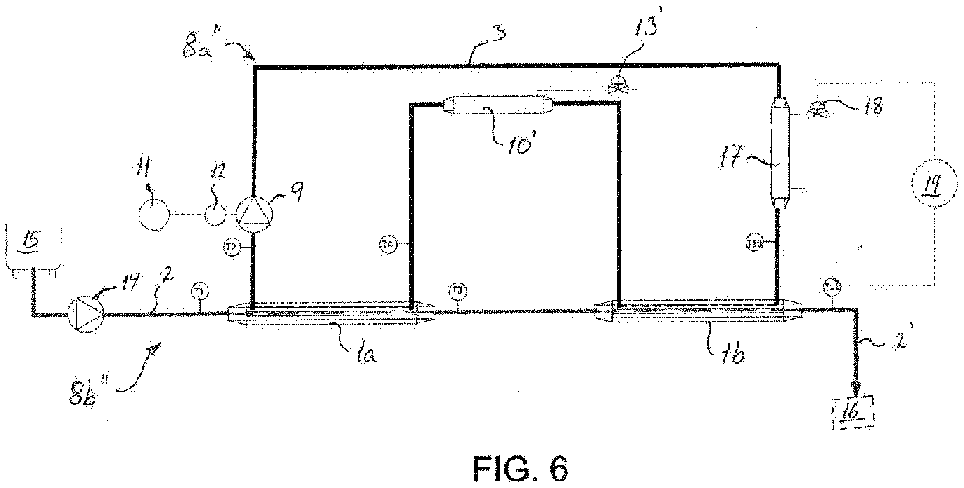

Fig. 6 shows an example of an embodiment of an implementation of the regenerative system in a plant, where the regenerative system comprises a single loop.

The first circuit 8b" comprises a series of heat exchanger units 1a, 1b in fluid communication with a pumping unit 14, supply means and filling means. Here, the product is supplied from a supply tank 15. Here, the treated product 2' is pumped into a filling station 16.

The first and second heat exchanger units 1a, 1b, the pumping unit 9 and the heating unit 10 is in further fluid communication with a cooling unit 17. These units form together the second circuit 8a" for circulating the medium 3.

A further temperature sensor measures the second inlet temperature, T10, of the second heat exchanger unit 1b. Similarly, another temperature sensor measures the first outlet temperature, T11, of the second heat exchanger unit 1b.

The cooling unit 17 is in fluid communication with an external supply unit of a cooling medium, where the control valve 18 is used to control the supply of the cooling medium. The control valve 18 is electrically connected to an optional regulator 19 which controls the operation of the control valve 18. The first outlet temperature, T11, of the second heat exchanger unit 1b is transmitted to the regulator 19 via an electrical connection. The regulator 19 may be integrated into the controller 11. The first outlet temperature T11 is used by the regulator 19 as input.

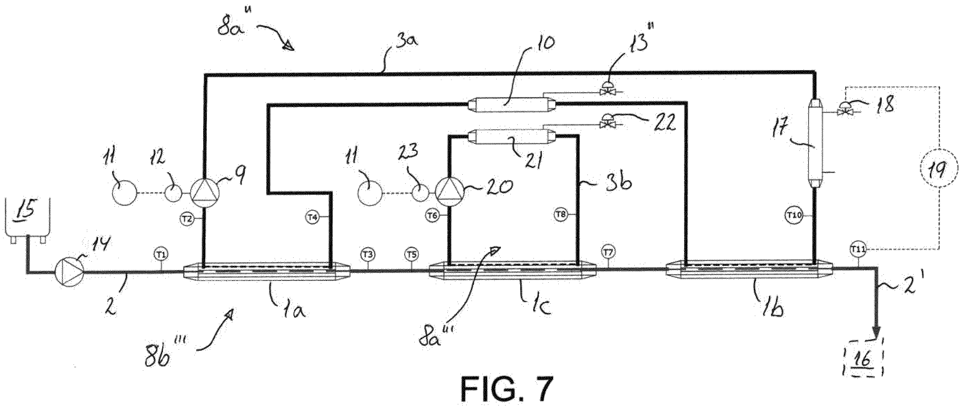

Fig. 7 shows an example of an embodiment of an implementation of the regenerative system in a plant, where the regenerative system comprises multiple loops. Compared with the circuit configuration of figure 6, the product 2 is in the first circuit 8b'" further pumped through a third heat exchanger unit 1c. The first loop of the second circuit 8a'" has a similar to that of figure 6.

In this configuration, the second loop of the second circuit 8a'" has a configuration similar to that of figure 4.

The second loop of the second circuit 8a'" comprises the third heat exchanger unit 1c in fluid communication with a pumping unit 20 and a heating unit 21. The pumping unit 20 is electrically connected to the controller 11 which controls the operation of the pumping unit 20. The controller 11 is configured to calculate a third ratio of a further first temperature difference, T7-T5, to the second temperature difference, T8-T6. The controller 11 is further configured to detect an error between the third ratio and another predetermined setpoint. A control signal is generated in the controller 11 to adjust another control parameter 23 of the medium flow.

The heating unit 21 is in fluid communication with an external supply unit of another heating medium, where a control valve 22 is used to control the supply of the heating medium. The first outlet temperature T7 of the third heat exchanger unit 1c is transmitted to the controller 11 via an electrical connection (not shown). The operation of the control valve 22 is controlled by the controller 11 using the first outlet temperature T7 as input.

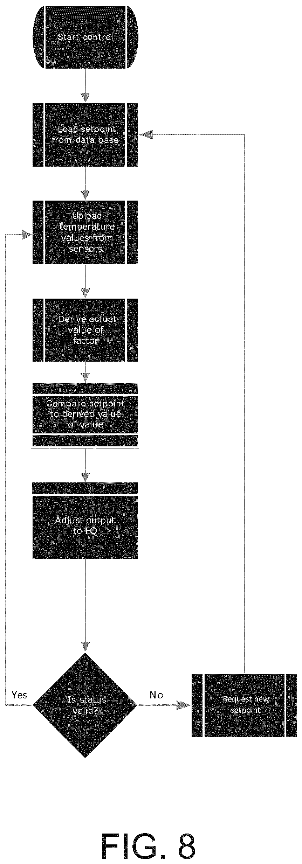

Fig. 8 shows a flowchart of the control method according to the invention. The control is initially started and the setpoint 11b is loaded in the controller 11 from a database.

The inlet and outlet temperatures, T1-T4, of the respective heat exchanger unit 1a-1c are measured using the respective temperature sensors and inputted to the controller 11. The controller 11 then determined the first and second temperature differences and calculates the ratio 11a.

The calculated ratio 11a is then compared to the setpoint 11b to detect an error, which is then used to generate a control signal for adjusting the control parameter 12, 23. Afterwards, the ratio is re-calculated and compared to the set-point.

If the re-calculated ratio matches the setpoint, then a new setpoint is loaded into the controller 11. If the re-calculated ratio does not match the setpoint, then the controller 11 continues to adjust the control parameter and/or request the operator to input a corrected setpoint.

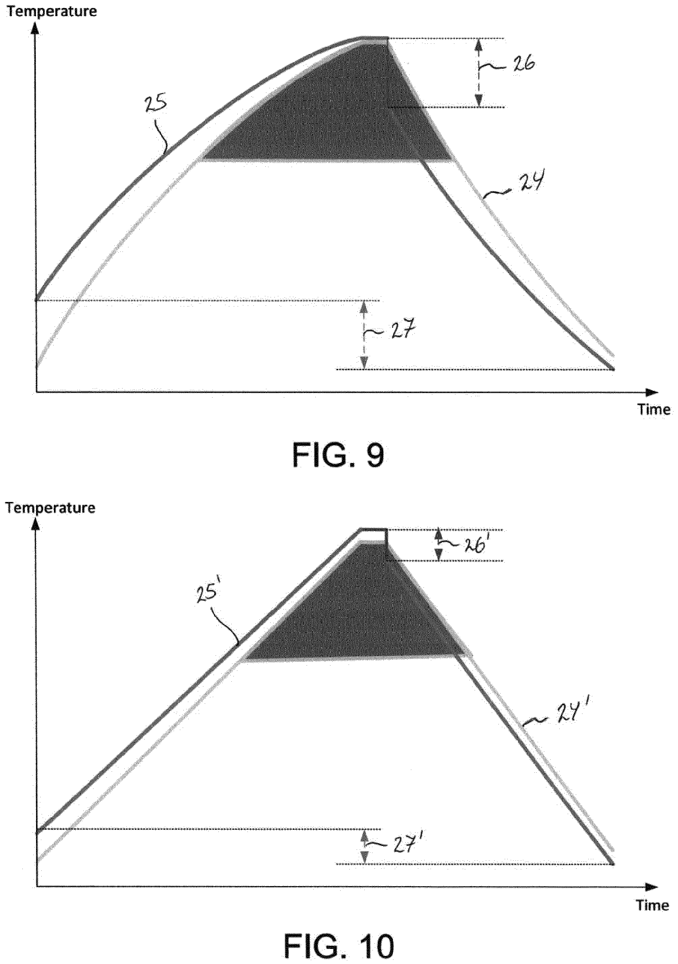

Fig. 9 shows an example of a graph of the measured temperatures without the present control scheme implemented. Here, a first graph 24 of the temperature of the product 2 and a second graph 25 of the temperature of the medium 3 are illustrated.

As illustrated, the medium flow is not balanced relative to the product flow and thus the medium 3 is circulated through the heat exchanger unit 1 at too high a velocity. This means that additional heating (indicated by arrow 26) from the heating unit is needed to maintain the product temperature at the setpoint. This increases the heat load damage of the product. Furthermore, additional cooling (indicated by arrow 27) is required from the cooling unit to cool the medium.

Fig. 10 shows an example of a graph of the measured temperatures with the present control scheme implemented.

As illustrated, the medium flow is balanced by the controller 11 to achieve an optimal energy transfer. This means that most of the energy from the medium 3 is transferred to the product 2, thus most of the cooling is done by regenerative effect and only a minimum of cooling 27' is required. Furthermore, less heating 26' is required and less time is spend at the elevated temperature, thereby reducing the heat load damage.

## Claims

1. A method of heating liquid or semi-liquid food products, such as milk or juices, where heat is transferred to a product from a medium by indirect heating, the product flows in a first direction in a first circuit and the medium flows in a second direction in a second circuit, wherein the flows of the product and medium are separated and flow relative to each in at least one common point, wherein the method comprises the steps of:
- determining a first temperature difference of the product at the at least one common point by measuring a first inlet temperature and a first outlet temperature of the product;
- further determining a second temperature difference of the medium at the at least one common point by measuring a second inlet temperature and a second outlet temperature of the medium;
- calculating at least one ratio of the first temperature difference to the second temperature difference;
- comparing the at least one ratio with at least one predetermined setpoint to detect an error between the at least one ratio and the at least one setpoint;
- adjusting a control parameter of the medium flow or the product as a function of the error between the at least one ratio and the at least one setpoint.

2. The method according to claim 1, **characterised in that**, the at least one setpoint is predetermined based on previous measurements.

3. The method according to claim 1 or 2, **characterised in that**, the at least one ratio is continuously or periodically compared with the at least one predetermined setpoint.

4. The method according to any one of claims 1 to 3, **characterised in that**, the control parameter is at least one of a flow rate, a velocity, a pressure or a temperature.

5. The method according to any one of claims 1 to4,6 **characterised in that**, the medium is a gas, a liquid, a steam or a combination thereof.

6. A system for heating liquid or semi-liquid food products, comprising:
- a first circuit in which a product is pumped in a first flow direction by a pumping unit, where at least one temperature sensor is arranged relative to the first circuit;
- a second circuit in which a medium is pumped in a second flow direction by a pumping unit, where at least one temperature sensor is arranged relative to the second circuit;
- at least one heat exchange unit coupled to the first and second circuits, wherein the flows of the first and second circuits are separated so that heat is transferred between the medium and the product by indirect heating,
- a controller,
- the first and second circuits each comprise an inlet temperature sensor and outlet temperature sensor,
- a controller electrically connected to the temperature sensors of the first and second circuits, where the controller is configured to determine a first temperature difference of the product and a second temperature difference of the medium, to calculate at least one ratio of the first temperature difference to the second temperature difference, wherein the controller is further configured to detect an error between the at least one ratio and at least one predetermined setpoint, and to adjust a control parameter of the medium flow or the product flow as function of the error between the at least one ratio and the at least one setpoint.

7. The system according to claim 6, **characterised in that**, the second circuit further comprises at least one of a heating unit or a cooling unit, the heating or cooling unit being configured to heat or cool the medium.

8. The system according to claim 6 or 7, **characterised in that**, the controller is electrically connected to at least the pumping unit of at least the first or second circuit, wherein the controller is configured to adjust at least one of a flow rate, a velocity, a pressure or a temperature of the medium flow or the product flow.

9. The system according to any one of claims 6 to 8, **characterised in that**, the medium and product are pumped in the same flow direction or in opposite flow directions through the heat exchange unit.

10. The system according to any one of claims 6 to 9, **characterised in that**, one of the first and second circuits is a closed circuit while the other circuit is an open circuit.

11. The system according to any one of claims 6 to 10, **characterised in that** the regenerative system forms part of a heating plant configured to indirectly transfer energy between the product and the medium.

12. Use of a method according to any one of claims 1 to 5, or a system according to any one of claims 6 to 11, for heat treatment of liquid or semi-liquid food products.
